# EUROPÄISCHE PATENTSCHRIFT

(11) **EP 1 377 749 B1**
(45) Veröffentlichungstag und Bekanntmachung des Hinweises auf die Patenterteilung: **05.03.2008**
(21) Anmeldenummer: 02729824.9
(22) Anmeldetag: 27.03.2002
(51) Int. Cl.: F02M 69/14, F16K 7/14, F02M 51/06

(54) **ELEKTROMAGNETISCH BETÄTIGBARES VENTIL**
ELECTROMAGNETICALLY ACTUATED VALVE
SOUPAPE A COMMANDE ELECTROMAGNETIQUE

(30) Priorität: 31.03.2001 DE 10116185
(43) Veröffentlichungstag der Anmeldung: 07.01.2004
(73) Patentinhaber: ROBERT BOSCH GMBH, 70442 Stuttgart (DE)
(72) Erfinder: PFROMMER, Ralf, 75399 Unterreichenbach (DE); HEYSE, Joerg, 74354 Besigheim (DE)
(86) Internationale Anmeldenummer: PCT/DE2002/001129
(87) Internationale Veröffentlichungsnummer: WO 2002/079640

(56) Entgegenhaltungen:
- DE-A- 3 943 005
- DE-A- 19 523 915
- DE-A- 19 607 288
- DE-A- 19 943 253
- DE-U- 8 614 741
- FR-A- 839 232
- US-A- 3 432 106
- US-A- 4 522 371
- US-A- 5 115 982

## Beschreibung

### Stand der Technik

Die Erfindung geht aus von einem elektromagnetisch betätigbaren Ventil nach dem Oberbegriff des unabhängigen Anspruchs 1.

Aus der DE-PS 39 43 005 ist bereits ein elektromagnetisch betätigbares Brennstoffeinspritzventil bekannt, bei dem im Sitzbereich mehrere scheibenförmige Elemente angeordnet sind. Bei Erregung des Magnetkreises wird eine als Flachanker fungierende flache Ventilplatte von einer mit ihr zusammenwirkenden gegenüberliegenden Ventilsitzplatte abgehoben, die gemeinsam ein Plattenventilteil bilden. Stromaufwärts der Ventilsitzplatte ist ein Drallelement angeordnet, das den zum Ventilsitz strömenden Brennstoff in eine kreisförmige Drehbewegung versetzt. Eine Anschlagplatte begrenzt den axialen Weg der Ventilplatte auf der der Ventilsitzplatte gegenüberliegenden Seite. Die Ventilplatte wird mit großem Spiel von dem Drallelement umgeben; eine gewisse Führung der Ventilplatte übernimmt damit das Drallelement. Im Drallelement sind an dessen unterer Stirnseite mehrere tangential verlaufende Nuten eingebracht, die vom äußeren Umfang ausgehend bis in eine mittlere Drallkammer reichen. Durch das Aufliegen des Drallelements mit seiner unteren Stirnseite auf der Ventilsitzplatte liegen die Nuten als Drallkanäle vor.

In der DE-OS 196 07 288 wurde bereits die sogenannte Multilayergalvanik zur Herstellung von Lochscheiben, die insbesondere für den Einsatz an Brennstoffeinspritzventilen geeignet sind, ausführlich beschrieben. Dieses Herstellungsprinzip einer Scheibenherstellung durch ein- oder mehrfaches galvanisches Metallabscheiden verschiedener Strukturen aufeinander, so dass eine einteilige Scheibe vorliegt, soll ausdrücklich zum Offenbarungsgehalt vorliegender Erfindung zählen.

Aus der DE-OS 195 23 915 ist bereits ein mittels Multilayergalvanik hergestelltes Mikroventil bekannt. Ein Ventilunterteil, das wenigstens einen Anker und ein bewegbares Ventilschließelement umfasst, ist durch galvanische Metallabscheidung mehrschichtig aufgebaut.

### Vorteile der Erfindung

Das erfindungsgemäße elektromagnetisch betätigbare Ventil mit den Merkmalen des unabhängigen Anspruchs 1 hat den Vorteil, dass es auf besonders einfache Art und Weise kostengünstig und extrem miniaturisiert herstellbar ist. Das erfindungsgemäße Ventil weist im Dichtsitzbereich in idealer Weise keine großen Speicherräume auf, die für ein großes Totvolumen sorgen könnten. Vielmehr ist der Ventilsitz unmittelbar an einer Zerstäuberscheibe integriert, so dass überhaupt kein zusätzliches Volumen zwischen dem Ventilsitz und dem Eintritt in die Zerstäuberscheibe entsteht. Auf diese Weise wird die gespeicherte Fluidmenge in diesem Bereich extrem gering gehalten. Bei einem als Brennstoffeinspritzventil verwendeten Ventil können somit wirkungsvoll in der Konsequenz unkontrollierte Nachspritzer im Motorbetrieb vermieden werden.

Durch die in den abhängigen Ansprüchen aufgeführten Maßnahmen sind vorteilhafte Weiterbildungen und Verbesserungen des im Hauptanspruch angegebenen Ventils möglich.

Von Vorteil ist es, das Betätigungsglied mit zwei Schenkeln, einem Abstützschenkel und einem Betätigungsschenkel, auszubilden, wobei der Abstützschenkel parallel zur Ventillängsachse und der Betätigungsschenkel weitgehend senkrecht zur Ventillängsachse verlaufen. In vorteilhafter Weise kann das Betätigungsglied mit sehr geringen Abmessungen und aufgrund des verwendeten Materials, z.B. Federblech, mit geringer Masse gefertigt werden. Aufgrund der geringen bewegten Masse des Betätigungsschenkels als einzigem beweglichen Teil können sehr kurze Schaltzeiten des Ventils erzielt und ein extrem geringer Verschleiß am Dichtsitz eingehalten werden.

Die Einzelteile des Ventils sind sehr einfach montierbar. So weist der Abstützschenkel beispielsweise an seinem unteren Ende eine keilförmige Abschrägung zur Befestigung des Betätigungsglieds durch Verkeilung auf.

### Zeichnung

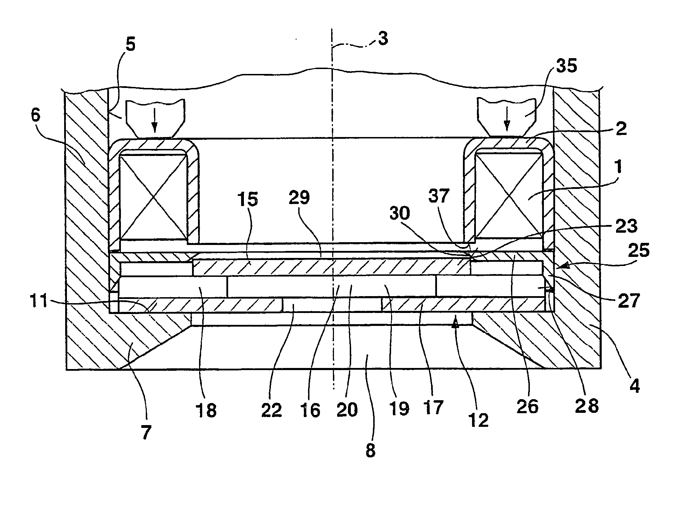

Ein Ausführungsbeispiel der Erfindung ist in der Zeichnung vereinfacht dargestellt und in der nachfolgenden Beschreibung näher erläutert. Figur 1 zeigt ein teilweise dargestelltes elektromagnetisch betätigbares Ventil in Miniaturbauweise.

### Beschreibung des Ausführungsbeispiels

Das in der Figur 1 beispielsweise als ein Ausführungsbeispiel dargestellte elektromagnetisch betätigbare Ventil in der Form eines Einspritzventils eignet sich besonders für den Einsatz in Brennstoffeinspritzanlagen von gemischverdichtenden, fremdgezündeten Brennkraftmaschinen. Das erfindungsgemäße Ventil kann jedoch auch zur gezielten Abgabe verschiedenster Fluide eingesetzt werden, z.B. als Inhalator, als Düse eines Tintenstrahldruckers oder als Zerstäuberdüse in der chemischen oder pharmazeutischen Industrie.

Das Ventil weist einen Magnetkreis auf, der als Aktuator des Ventils fungiert. Der Magnetkreis umfasst einerseits eine Magnetspule 1 und andererseits einen die Magnetspule 1 zumindest teilweise umhüllenden Magnetbügel 2. Der ringförmige Magnetbügel 2 umschließt die Magnetspule 1 z.B. an drei Seiten und dient als Innenpol des Magnetkreises. Mit seinem umgekehrten U-Profil sorgt der Magnetbügel 2 für einen besonders kompakten und kurzen Aufbau des Ventils im Bereich der Magnetspule 1.

Montiert ist der sehr kompakte Magnetkreis in einem konzentrisch zu einer Ventillängsachse 3 ausgebildeten Ventilgehäuse 4. Im Ventilgehäuse 4 ist eine durchgängige Längsöffnung 5 vorgesehen, die sich entlang einer Ventillängsachse 3 erstreckt. Das Ventilgehäuse 4 mit seiner Längsöffnung 5 dient auch als Brennstoffeinlassstutzen, wobei die Längsöffnung 5 einen Brennstoffzufuhrkanal darstellt. In der Längsöffnung 5 ist zulaufseitig z.B. ein nicht dargestellter Brennstoffilter vorgesehen, der für die Herausfiltrierung solcher Brennstoffbestandteile sorgt, die aufgrund ihrer Größe im Einspritzventil Verstopfungen oder Beschädigungen verursachen könnten.

Das Ventilgehäuse 4 weist beispielsweise einen rohrförmigen Gehäusemantel 6, in dem sich die Längsöffnung 5 mit weitgehend konstantem Durchmesser erstreckt, und einen Gehäuseboden 7, der den stromabwärtigen Abschluss des Ventilgehäuses 4 und damit des gesamten Ventils bildet, auf. Im Gehäuseboden 7 ist eine Auslassöffnung 8 vorgesehen, die letztlich eine Verlängerung der Längsöffnung 5 darstellt, aber eine geringere Öffnungsweite besitzt. Durch die Ausbildung des Gehäusebodens 7 ist die Montagerichtung der inneren Ventilbauteile vorgegeben, die somit nur von der Zulaufseite aus nach dem sogenannten Kugelschreibereinbauprinzip eingebracht werden können.

Auf den inneren Grund 11 des Gehäusebodens 7 wird zuerst eine z.B. mehrlagige Zerstäuberscheibe 12 aufgelegt. Diese Zerstäuberscheibe 12 wird beispielsweise mittels sogenannter Multilayergalvanik, einem mehrschichtigen galvanischen Metallabscheiden, aufgebaut und als kompaktes Einzelbauteil in das Ventil eingebracht.

In der Figur 1 ist eine dreilagige bzw. -schichtige Zerstäuberscheibe 12 in der Funktion als Drallscheibe dargestellt. In dem erfindungsgemäßen Ventil sind jedoch auch völlig andere Bauformen von Zerstäuberscheiben einsetzbar. Die Schichten der Zerstäuberscheibe 12 werden nacheinander galvanisch abgeschieden, so dass sich die Folgeschicht aufgrund galvanischer Haftung fest mit der darunterliegenden Schicht verbindet. Die Zerstäuberscheibe 12 weist einen solchen Außendurchmesser auf, dass sie mit einem gewissen Abstand zur Längsöffnung 5 eingepasst werden kann. Bezeichnet werden die drei Schichten der Zerstäuberscheibe 12 im folgenden entsprechend ihrer Funktion mit Deckelschicht 15, Drallerzeugungsschicht 16 und Bodenschicht 17. Wie Figur 1 zu entnehmen ist, ist die obere Deckelschicht 15 mit einem kleineren Außendurchmesser als die beiden darauffolgenden Schichten 16, 17 ausgebildet. Auf diese Weise ist gewährleistet, dass der Brennstoff bei geöffnetem Ventil an der Deckelschicht 15 außen vorbei strömen und so ungehindert in äußere Einlassbereiche 18 von beispielsweise vier vom äußeren Umfang der Zerstäuberscheibe 12 ausgehenden Drallkanälen 19 in der mittleren Drallerzeugungsschicht 16 eintreten kann.

Die obere Deckelschicht 15 stellt eine geschlossene metallische Schicht dar, die keine Öffnungsbereiche zum Durchströmen aufweist und deshalb auch als Ventilsitz 23 dient. In der Drallerzeugungsschicht 16 ist dagegen eine komplexe Öffnungskontur vorgesehen, die über die gesamte axiale Dicke dieser Schicht 16 verläuft. Die Öffnungskontur der mittleren Schicht 16 wird von einer inneren Drallkammer 20 und von einer Vielzahl von in die Drallkammer 20 mündenden Drallkanälen 19 gebildet. Die z.B. zwei bis acht Drallkanäle 19 münden tangential in die Drallkammer 20. Während die Drallkammer 20 vollständig von der Deckelschicht 15 überdeckt ist, liegen die Drallkanäle 19 nur teilweise abgedeckt vor, da die der Drallkammer 20 abgewandten äußeren Enden die nach oben hin offenen Einlassbereiche 18 bilden. Durch die tangentiale Einmündung der Drallkanäle 19 in die Drallkammer 20 bekommt der Brennstoff einen Drehimpuls aufgeprägt, der so auch in einer mittleren kreisförmigen Auslassöffnung 22 der unteren Bodenschicht 17 sowie in der Auslassöffnung 8 des Ventilgehäuses 4 erhalten bleibt.

Die Zerstäuberscheibe 12 wird in mehreren metallischen Schichten durch galvanische Abscheidung aufgebaut. Aufgrund der tiefenlithographischen, galvanotechnischen Herstellung gibt es besondere Merkmale in der. Konturgebung, von denen hiermit einige in Kurzform zusammenfassend aufgeführt sind:
- Schichten mit über die, Scheibenfläche konstanter Dicke,
- durch die tiefenlithtigraphische Strukturierung weitgehend senkrechte Einschnitte in den Schichten, welche die jeweils durchströmten Hohlräume bilden (fertigungstechnisch bedingte Abweichungen von ca. 3° gegenüber optimal senkrechten Wandungen können auftreten),
- gewünschte Hinterschneidungen und Überdeckungen der Einschnitte durch mehrlagigen Aufbau einzeln strukturierter Metallschichten,
- Einschnitte mit beliebigen, weitgehend achsparallele Wandungen aufweisenden Querschnittsformen,
- einteilige Ausführung der Zerstäuberscheibe, da die einzelnen Metallabscheidungen unmittelbar aufeinander erfolgen.

Mit ihrer oberen Begrenzungskante bildet die Zerstäuberscheibe 12 an der Deckelschicht 15 einen Ventilsitz 23. Als zum Öffnen und Schließen des Ventils dienendes Ventilglied ist ein schalen-, trog- bzw. napfförmiges Betätigungsglied 25 vorgesehen. Das sowohl als Anker als auch als Ventilschließelement dienende Betätigungsglied 25 wirkt mit dem Ventilsitz 23 als Dichtventil zusammen. Das Betätigungsglied 25, das einen L-förmigen Querschnitt besitzt, weist zwei Schenkel auf, zum einen einen weitgehend senkrecht zur Ventillängsachse 3 gerichteten Betätigungsschenkel 26 und zum anderen einen ringförmigen, parallel zur Ventillängsachse 3 ausgerichteten Abstützschenkel 27, die somit weitgehend senkrecht abgeknickt zueinander verlaufen.

Nach der Montage der Zerstäuberscheibe 12 wird das Betätigungsglied 25 in die Längsöffnung 5 eingebracht. Der Abstützschenkel 27 weist an seinem unteren Ende eine keilförmige Abschrägung 28 auf, die so zwischen der inneren Wandung des Ventilgehäuses 4 und der Zerstäuberscheibe 12 eingedrückt wird, dass sie sich an der mittleren Drallerzeugungsschicht 16 verkeilt. Da dies über den gesamten Umfang der Zerstäuberscheibe 12 geschieht, wird die Zerstäuberscheibe 12 sicher, zuverlässig und zentriert am Ventilende fixiert.

Der Betätigungsschenkel 26 ist ebenfalls ringförmig ausgeführt, da er eine innere Ausnehmung 29 aufweist. Der Randbereich 30 der Ausnehmung 29 verläuft in Strömungsrichtung kegelstumpfförmig erweiternd und bildet das unmittelbare Ventilschließelement, das mit dem Ventilsitz 23 an der Deckelschicht 15 korrespondiert. Bei geschlossenem Ventil liegt der Betätigungsschenkel 26 des Betätigungsglieds 25 am Ventilsitz 23 an. Die Druckkraft, mit der das Betätigungsglied 25 auf den Ventilsitz 23 drückt, ergibt sich aus der Federsteifigkeit des für das Betätigungsglied 25 verwendeten Materials (z.B. Federblech) und dem darauf lastenden Brennstoffruhedruck.

Die Magnetspule 1 wird in dem Magnetbügel 2 vormontiert, und nachfolgend wird diese Magnetkreisbaugruppe ebenfalls in die Längsöffnung 5 eingebracht. Ein radiales Übermaß im Außendurchmesser des Magnetbügels 2 sorgt für eine gewünschte axiale Fixierung durch radiale Pressung im Ventilgehäuse 4.

Um den Durchfluss im Bereich des Ventilsitzes 23 freizugeben, muss das Betätigungsglied 25 mit dem Randbereich 30 des Betätigungsschenkels 26 um einen definierten Hub von der Zerstäuberscheibe 12 abheben. Die Betätigung des Ventils erfolgt dabei in bekannter Weise elektromagnetisch. Der Öffnungshub wird durch plastisches Verformen des Magnetbügels 2 im bereits montierten Zustand eingestellt. Hierzu kann beispielsweise mit einem nur angedeuteten Verformungswerkzeug 35 auf den Magnetbügel 2 axial gedrückt werden. Die Federkraft des Betätigungsglieds 25 wird bereits vorher ebenfalls durch plastische Verformung in axialer Richtung eingestellt.

Der Hub des Betätigungsglieds 25 wird also u.a. durch die Einbaulagen von Betätigungsglied 25 und Magnetbügel 2 vorgegeben. Die eine Endstellung des Betätigungsglieds 25 ist bei nicht erregter Magnetspule 1 durch die Anlage des Betätigungsschenkels 26 am Ventilsitz 23 festgelegt, während sich die andere Endstellung des Betätigungsglieds 25 bei erregter Magnetspule 1 durch die Anlage des Betätigungsschenkels 26 an der inneren stromabwärtigen Stirnseite 37 des als Innenpol dienenden Magnetbügels 2 ergibt.

Die kompakte Bauweise der Einzelbauteile des Ventils erlaubt es, ein miniaturisiertes Ventil mit einem Außendurchmesser von nur ca. 4 mm herzustellen.

## Patentansprüche

1. Elektromagnetisch betätigbares Ventil mit einer Ventillängsachse (3), mit einem elektromagnetischen Kreis (1, 2), mit einem beweglichen Betätigungsglied (25), das zum Öffnen und Schließen des Ventils mit einem festen Ventilsitz (23) zusammenwirkt, und mit einer stromabwärts des Ventilsitzes (23) ausgebildeten Auslassöffnung (8), **dadurch gekennzeichnet, dass** das Betätigungsglied (25) schalen-, trog- bzw. napfförmig mit einem Betätigungsschenkel (26) und einem weitgehend dazu senkrecht ausgebildeten Abstützschenkel (27) ausgeführt ist.

2. Ventil nach Anspruch 1, **dadurch gekennzeichnet, dass** der Abstützschenkel (27) parallel zur Ventillängsachse (3) und der Betätigungsschenkel (26) weitgehend senkrecht zur Ventillängsachse (3) verlaufen.

3. Ventil nach Anspruch 1 oder 2, **dadurch gekennzeichnet, dass** nur der Betätigungsschenkel (26) den beweglichen Teil des Betätigungsgliedes (25) bildet.

4. Ventil nach einem der vorhergehenden Ansprüche, **dadurch gekennzeichnet, dass** der Abstützschenkel (27) ringförmig umläuft und der Betätigungsschenkel (26) durch eine innere Ausnehmung (29) ebenfalls ringförmig ausgebildet ist.

5. Ventil nach Anspruch 4, **dadurch gekennzeichnet, dass** der Betätigungsschenkel (26) mit dem Randbereich (30) der Ausnehmung (29) ein Ventilschließelement bildet.

6. Ventil nach Anspruch 5, **dadurch gekennzeichnet, dass** der Randbereich (30) der.Ausnehmung (29) in Strömungsrichtung kegelstumpfförmig erweiternd verläuft.

7. Ventil nach einem der vorhergehenden Ansprüche, **dadurch gekennzeichnet, dass** der Abstützschenkel (27) an seinem unteren Ende eine keilförmige Abschrägung (28) zur Befestigung des Betätigungsglieds (25) aufweist.

8. Ventil nach einem der vorhergehenden Ansprüche, **dadurch gekennzeichnet, dass** stromaufwärts der Auslassöffnung (8) im Ventil eine mehrlagige Zerstäuberscheibe (12) angeordnet ist.

9. Ventil nach Anspruch 8, **dadurch gekennzeichnet, dass** eine obere Lage (15) der Zerstäuberscheibe (12) einen Ventilsitz (23) aufweist, mit dem der Betätigungsschenkel (26) zum Öffnen und Schließen des Ventils zusammenwirkt.

10. Ventil nach Anspruch 8 oder 9, **dadurch gekennzeichnet, dass** der Abstützschenkel (27) zwischen einem Ventilgehäuse (4) und einer stromabwärts der oberen Lage (15) befindlichen weiteren Lage (16) der Zerstäuberscheibe (12) verkeilt ist.

11. Ventil nach einem der Ansprüche 8 bis 10, **dadurch gekennzeichnet, dass** die Zerstäuberscheibe (12) als Drallscheibe mit wenigstens einem Drallkanal (19) ausgebildet ist.

12. Ventil nach einem der Ansprüche 8 bis 11, **dadurch gekennzeichnet, dass** die Zerstäuberscheibe (12) mittels galvanischer Metallabscheidung in mehreren Schichten aufbaubar ist.

13. Ventil nach einem der vorhergehenden Ansprüche, **dadurch gekennzeichnet, dass** der elektromagnetische Kreis von einer Magnetspule (1) und einem Magnetbügel (2) gebildet ist, wobei der Magnetbügel (2) ringförmig mit einem U-Profil ausgeführt ist und die Magnetspule (1) innerhalb des U-Profils angeordnet ist.

14. Ventil nach Anspruch 13, **dadurch gekennzeichnet, dass** der Öffnungshub des Betätigungsgliedes (25) durch plastisches Verformen des Magnetbügels (2) einstellbar ist.

15. Verwendung des Ventils nach einem der Ansprüche 1 bis 14 als Brennstoffeinspritzventil in einer Brennkraftmaschine, insbesondere in einer gemischverdichtenden, fremdgezündeten Brennkraftmaschine.

## Claims

1. Electromagnetically actuable valve having a valve longitudinal axis (3), having an electromagnetic circuit (1, 2), having a movable actuating element (25) which, in order to open and close the valve, interacts with a fixed valve seat (23), and having an outlet opening (8) formed downstream of the valve seat (23), **characterized in that** the actuating element (25) is of shell-shaped, trough-shaped or cup-shaped design with an actuating limb (26) and a support limb (27) which is formed substantially perpendicular to said actuating limb (26).

2. Valve according to Claim 1, **characterized in that** the support limb (27) runs parallel to the valve longitudinal axis (3) and the actuating limb (26) runs substantially perpendicular to the valve longitudinal axis (3).

3. Valve according to Claim 1 or 2, **characterized in that** only the actuating limb (26) forms the movable part of the actuating element (25).

4. Valve according to one of the preceding claims, **characterized in that** the support limb (27) is annularly encircling and the actuating limb (26), by means of an inner recess (29), is likewise of annular design.

5. Valve according to Claim 4, **characterized in that** the actuating limb (26) forms a valve closing element with the edge region (30) of the recess (29).

6. Valve according to Claim 5, **characterized in that** the edge region (30) of the recess (29) runs so as to widen frustoconically in the flow direction.

7. Valve according to one of the preceding claims, **characterized in that** the support limb (27) has, at its lower end, a wedge-shaped bevel (28) for fastening the actuating element (25).

8. Valve according to one of the preceding claims, **characterized in that** a multi-layer vaporizer disc (12) is arranged upstream of the outlet opening (8) in the valve.

9. Valve according to Claim 8, **characterized in that** an upper layer (15) of the vaporizer disc (12) has a valve seat (23) with which the actuating limb (26) interacts in order to open and close the valve.

10. Valve according to Claim 8 or 9, **characterized in that** the support limb (27) is wedged between a valve housing (4) and a further layer (16) of the vaporizer disc (12) which is situated downstream of the upper layer (15).

11. Valve according to one of Claims 8 to 10, **characterized in that** the vaporizer disc (12) is embodied as a swirl disc with at least one swirl duct (19).

12. Valve according to one of Claims 8 to 11, **characterized in that** the vaporizer disc (12) can be constructed in a plurality of layers by means of galvanic metal deposition.

13. Valve according to one of the preceding claims, **characterized in that** the electromagnetic circuit is formed by a magnet coil (1) and a magnet bar (2), with the magnet bar (2) being of annular design with a U-shaped profile, and the magnet coil (1) being arranged within the U-shaped profile.

14. Valve according to Claim 13, **characterized in that** the opening stroke of the actuating element (25) can be set by means of plastic deformation of the magnet bar (2).

15. Use of the valve according to one of Claims 1 to 14 as a fuel injection valve in an internal combustion engine, in particular in a mixture-compression, sparkignition internal combustion engine.

## Revendications

1. Soupape à commande électromagnétique comportant un axe longitudinal (3), un circuit électromagnétique (1, 2), un organe d'actionnement (25), mobile, coopérant avec un siège de soupape fixe (23) pour ouvrir et fermer la soupape ainsi qu'un orifice de sortie (8) en aval du siège de soupape (23),
**caractérisée en ce que**
l'organe d'actionnement (25) est en forme de coupelle, d'auge ou de pot et comporte une branche d'actionnement (26) et une branche d'appui (27) pratiquement perpendiculaires à celui-ci.

2. Soupape selon la revendication 1,
**caractérisée en ce que**
la branche d'appui (27) est parallèle à l'axe longitudinal (3) et la branche d'actionnement (26) est pratiquement perpendiculaire à l'axe longitudinal (3) de la soupape.

3. Soupape selon la revendication 1 ou 2,
**caractérisée en ce que**
seule la branche d'actionnement (26) constitue la partie mobile de l'organe d'actionnement (25).

4. Soupape selon l'une des revendications précédentes,
**caractérisée en ce que**
la branche d'appui (27) est de forme annulaire et la branche d'actionnement (26) est constituée par une cavité intérieure (29) également de forme annulaire.

5. Soupape selon la revendication 4,
**caractérisée en ce que**
la branche d'actionnement (26) forme un élément d'obturation de soupape avec la zone de bord (30) de la cavité (29).

6. Soupape selon la revendication 5,
**caractérisée en ce que**
la zone de bord (30) de la cavité (29) s'élargit en forme de tronc de cône dans la direction d'écoulement.

7. Soupape selon l'une des revendications précédentes,
**caractérisée en ce que**
la branche d'appui (27) présente à son extrémité inférieure une partie en biais (28), en forme de coin, pour fixer l'organe d'actionnement (25).

8. Soupape selon l'une des revendications précédentes,
**caractérisée en ce qu'**
un disque de pulvérisation (12) à plusieurs couches est prévu en amont de l'orifice de sortie (8) dans la soupape.

9. Soupape selon la revendication 8,
**caractérisée en ce que**
la couche supérieure (15) du disque de pulvérisation (12) comporte un siège de soupape (23) avec lequel coopère la branche d'actionnement (26) pour ouvrir et fermer la soupape.

10. Soupape selon la revendication 8 ou 9,
**caractérisée en ce que**
la branche d'appui (27) est bloquée entre le boîtier de soupape (4) et une autre couche (16) du disque de pulvérisation (12), qui se trouve en amont de la couche supérieure (15).

11. Soupape selon l'une des revendications 8 à 10,
**caractérisée en ce que**
le disque de pulvérisation (12) est un disque de mise en rotation ayant au moins un canal de mise en rotation (19).

12. Soupape selon l'une des revendications 8 à 11,
**caractérisée en ce que**
le disque de pulvérisation (12) est construit en plusieurs couches par dépôt métallique galvanique.

13. Soupape selon l'une des revendications précédentes,
**caractérisée en ce que**
le circuit électromagnétique est formé par une bobine électromagnétique et un étrier magnétique (2) qui est de forme annulaire avec un profil en U et la bobine magnétique (1) est logée à l'intérieur du profil en U.

14. Soupape selon la revendication 13,
**caractérisée en ce que**
la course d'ouverture de l'organe d'actionnement (25) est réglable par déformation plastique de l'étrier magnétique (2).

15. Utilisation de la soupape selon l'une des revendications 1 à 14 comme injecteur de carburant d'un moteur à combustion interne, notamment d'un moteur à combustion interne à compression de mélange et allumage commandé.
